(19) Europäisches Patentamt
European Patent Office
Office européen des brevets

(11) EP 1 378 538 B1

(12) **EUROPEAN PATENT SPECIFICATION**

(45) Date of publication and mention
of the grant of the patent:
**15.10.2014 Bulletin 2014/42**

(51) Int Cl.:
**C08J 9/18** (2006.01)

(21) Application number: **03014902.5**

(22) Date of filing: **01.07.2003**

(54) **Expanded polylactic acid resin beads and foamed molding obtained therefrom**

Geschäumte Teilchen aus einem Polymilchsäureharz und hieraus erhaltenes geschäumtes Formteil

Particules de résine d'acide polylactique expansées et moulage expansé obtenu à partir de ces particules

(84) Designated Contracting States:
**AT BE BG CH CY CZ DE DK EE ES FI FR GB GR HU IE IT LI LU MC NL PT RO SE SI SK TR**

(30) Priority: **01.07.2002 JP 2002192434**

(43) Date of publication of application:
**07.01.2004 Bulletin 2004/02**

(73) Proprietor: **JSP CORPORATION Tokyo (JP)**

(72) Inventors:
• **Shinohara, Mitsuru**
**Kanuma-shi,**
**Tochigi-ken (JP)**
• **Tokiwa, Tomoo**
**Kanuma-shi,**
**Tochigi-ken (JP)**
• **Sasaki, Hidehiro**
**Kanuma-shi,**
**Tochigi-ken (JP)**

(74) Representative: **Mai, Dörr, Besier**
**Patentanwälte**
**Steuerberater/Wirtschaftsprüfer**
**Kreuzberger Ring 64**
**65205 Wiesbaden (DE)**

(56) References cited:
**EP-A- 1 035 158     JP-A- 2000 136 261**

• **DATABASE WPI Section Ch, Week 199332 Derwent Publications Ltd., London, GB; Class A23, AN 1993-252880 XP002257695 & JP 05 170965 A (MITSUI TOATSU CHEM INC), 9 July 1993 (1993-07-09)**

Remarks:
The file contains technical information submitted after the application was filed and not included in this specification

**Description**

This invention relates to expanded polylactic acid resin beads and a biodegradable foamed molding made from the beads.

Foamed moldings of polystyrene, polyethylene or polypropylene are now increasingly used in various fields as, for example, cushioning materials for packaging articles, containers or boxes for agricultural products or raw fishes, automobile parts and construction materials. These foamed moldings, which are generally stable, tend to remain in our environment without decomposing after disposal and to cause serious environmental problems.

Many studies are being made on polymers which are decomposable by microorganisms. Among various biodegradable polymers, polylactic acid resins have actually used as, for example, surgical suture materials. Polylactic acid resins are promising because their starting material, lactic acid, can be prepared with a high yield at a low cost by fermentation of biomass such as corn.

In view of the biodegradability, safety to human bodies and practicalities of polylactic acid resins, there is a demand for foamed moldings of polylactic acid resins. JP-A-H04-304244, JP-A-H05-139435, JP-A-H05-140361, JP-T-H05-508669 and JP-A-H09-263651 propose foamed polylactic acid resin moldings prepared by extrusion. JP-A-H0-170965, JP-A-H05-170966, JP-A-2000-36261 disclose expandable beads of polylactic acid resins. When the expandable polylactic acid beads filled in a mold are heated with a hot air, they are expanded, foamed and fuse-bonded to each other to form a molding. The expandable beads are advantageous because they can give foamed moldings of desired shapes without severe restriction and because they permit easy control of the physical properties of the foamed moldings such as weight, cushioning property and heat insulating property.

A foamed molding prepared from such expandable polylactic acid resin beads, however, have a problem that the dimensional stability and the mechanical properties thereof are not satisfactory, because the density of the molding is not uniform and because the bonding force between beads is not uniform.

The present invention has been made in view of the above problems of known foamed polylactic acid resin moldings.

In accordance with the present invention there is provided a non-crosslinked polylactic acid resin expanded bead comprising a base resin containing at least 50 % by weight of a polylactic acid resin which contains at least 50 mole % of lactic acid units and which includes a crystalline polylactic acid resin,
said bead having such characteristics in heat flux scanning differential calorimetry that a difference ($\Delta H_{endo:Bead}$-$\Delta H_{exo:Bead}$) between an endothermic calorific value $\Delta H_{endo:Bead}$ and an exothermic calorific value $\Delta H_{exo:Bead}$ is not less than 5 J/g but less than 30 J/g and that the endothermic calorific value $\Delta H_{endo:Bead}$ is at least 15 J/g,
said bead having an average cell diameter of 10 to 800 $\mu$m, and wherein the endothermic calorific value $\Delta H_{endo:Bead}$ and exothermic calorific value $\Delta H_{exo:Bead}$ are determined from DSC curve of heat flux differential scanning calorimetry and the DSC measurement is carried out by charging a sample (about 1 to 4 mg) of an expanded bead in a pan of a differential scanning calorimeter and measuring the DSC curve while heating the sample at 2°C/minute from 40°C to 200°C to melt the sample.

In another aspect, the present invention provides a foamed molding obtainable by molding expanded beads according to any preceding claim in a mold and having a flexural strength of A [N/cm$^2$] and a density of B [g/cm$^3$], wherein the ratio of A/B is at least 294 N·cm/g and wherein the flexural strength is measured in accordance with JIS K7221-1984 and the foamed molding showing such heat flux scanning differential calorimetric characteristics that a difference ($\Delta H_{endo:Mold}$-$\Delta H_{exo:Mold}$) between an endothermic calorific value $\Delta H_{endo:Mold}$ and an exothermic calorific value $\Delta H_{exo:Mold}$ is not less than 15 J/g,
wherein the endothermic calorific value $\Delta H_{endo:Mold}$ and exothermic calorific value $\Delta H_{exo:Mold}$ are determined from DSC curve of heat flux differential scanning calorimetry and the DSC measurement is carried out by charging a sample (about 1 to 4 mg) of a foamed molding in a pan of a differential scanning calorimeter and measuring the DSC curve while heating the sample at 2°C/minute from 40°C to 200°C to melt the sample.

The present invention will be described in detail below with reference to the accompanying drawings, in which:

FIG. 1(a) is an example of a DSC curve of a polylactic acid resin as measured with a heat flux differential scanning calorimeter, explanatory of a method of determining a calorific value of an endothermic peak;
FIG. 1(b) is an another example of a DSC curve similar to FIG. 1(a);
FIG. 2(a) is an example of a DSC curve of expanded polylactic acid resin beads as measured with a heat flux differential scanning calorimeter, explanatory of a method of determining a calorific value of each of an endothermic peak and an exothermic peak;
FIG. 2(b) is an another example of a DSC curve similar to FIG. 2(a); and
FIG. 2(c) is a further example of a DSC curve similar to FIG. 2(a).

Expanded beads according to the present invention comprise a polylactic acid resin containing at least 50 mole % of lactic acid units and are non-crosslinked beads obtained by expanding polylactic acid resin particles.

The term "polylactic acid resin" as used herein is intended to refer to a polymer or copolymer containing lactic acid as monomer component units or a mixture thereof. Examples of the polylactic acid resin include (a) a homopolymer of lactic acid, (b) a copolymer of lactic acid with one or more aliphatic hydroxycarboxylic acids other than lactic acid, (c) a copolymer of lactic acid with an aliphatic polyhydric alcohol and an aliphatic polycarboxylic acid, (d) a copolymer of lactic acid with an aliphatic polyhydric alcohol, (e) a copolymer of lactic acid with an aliphatic polycarboxylic acid, and (f) a mixture of two or more of (a)-(e) above. Examples of the hydroxycarboxylic acid other than lactic acid include glycolic acid, hydroxybutyric acid, hydroxyvaleric acid, hydroxycaproic acid and hydroxyheptoic acid. Examples of the aliphatic polyhydric alcohol include ethylene glycol, 1,4-butanediol, 1,6-hexanediol, 1,4-cyclohexanedimethanol, neopentyl glycol, decamethylene glycol, glycerin, trimethylolpropane and pentaerythritol. Examples of aliphatic polycarboxylic acid include succinic acid, adipic acid, suberic acid, sebacic acid, dodecanedicarboxylic acid, succinic anhydride, adipic anhydride, trimesic acid, propanetricarboxylic acid, pyromellitic acid and pyromellitic anhydride.

The term "lactic acid" as used herein is intended to refer to L-lactic acid, D-lactic acid, DL-lactic acid, a cyclic dimer thereof (i.e. L-lactide, D-lactide or DL-lactide) or a mixture thereof.

The polylactic acid resin has preferably such characteristics in heat flux scanning differential calorimetry that the endothermic calorific value (heat of fusion) $\Delta H_{endo:Material}$ is at least 15 J/g, more preferably at least 20 J/g, most preferably at least 25 J/g. The upper limit of the endothermic calorific value is not specifically limited but is generally about 60 J/g. The polylactic acid resin having an endothermic calorific value $\Delta H_{endo:Material}$ of at least 15 J/g may be, for example, a crystalline polylactic acid resin or a mixture of crystalline and non-crystalline polylactic acid resins.

The term "endothermic calorific value $\Delta H_{endo:Material}$" as used herein is determined from DSC curve of heat flux differential scanning calorimetry in accordance with JIS K7122-1987. The DSC measurement is carried out as follows. A polylactic acid resin sample (about 1 to 4 mg) is charged in a pan of a differential scanning calorimeter and heated to 200°C to melt the sample. After maintaining the sample at that temperature for 10 minutes, the sample is cooled to 110°C at a cooling rate of 2°C/minute. The sample is maintained at 110°C for 120 minutes and then cooled to 40°C at a cooling rate of 2°C/minute. After the above-described pretreatment, the DSC curve is measured while heating again the sample at 2°C/minute to a temperature higher by about 30°C than the temperature at which the endothermic peak ends.

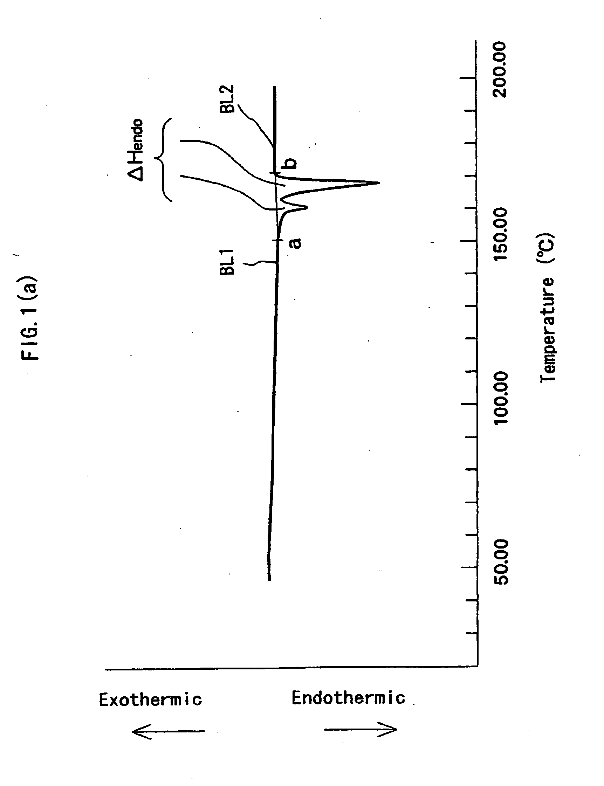

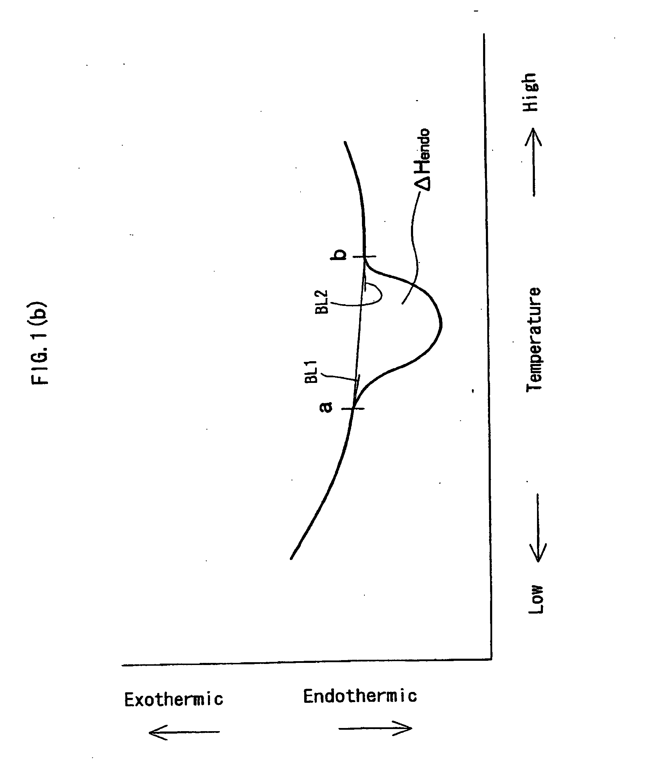

FIG. 1(a) depicts an example of such a DSC curve. In FIG. 1(a), there are dual endothermic peaks which begin from a point "a" where the DSC curve begins separating from a low temperature-side base line BL1 and which terminate at a point "b" where the DSC curve returns to a high temperature-side base line BL2. The endothermic calorific value $\Delta H_{endo:Material}$ is an integration of the endothermic peak area, namely the area defined by a line passing the points "a" and "b" and the endothermic curve. The DSC device should be preferably operated so that each of the base lines BL1 and BL2 is straight as shown in FIG. 1 (a). When the base line or lines are inevitably curved the points "a" and "b" are determined as follows. For example, as shown in FIG. 1(b), when the base lines BL1 and BL2 are curved, the curved base line BL1 is extended to the high temperature side with the radius of the curvature of the base line being maintained. The point at which the DSC curve begins separating from the curved base line BL1 is the point "a". Similarly, the point "b" is a point where the DSC curve returns to a curved base line BL2 on the high temperature-side.

The above-described pretreatment is carried out for the purpose of crystallizing the polylactic acid resin sample as much as possible. Thus, the endothermic calorific value $\Delta H_{endo:Material}$ obtained represents a heat of fusion of the completely or nearly completely crystallized polylactic acid resin. Further, in the above-described DSC measurement employs a heating rate of 2°C/minute. The heating rate of 2°C/minute is suitable for separating the endothermic peak and exothermic peak in the DSC curve and for obtaining accurate endothermic calorific value $\Delta H_{endo:Material}$.

In the expanded beads according to the present invention, the polylactic acid resin may be used in the form of a mixture with an additional resin as long as the object and effect of the present invention are not adversely affected. The amount of the polylactic acid resin in the mixture is at least 50 % by weight, preferably at least 70 % by weight, more preferably at least 90 % by weight, based on a total weight of the polylactic acid resin and the additional resin.

Examples of the additional resin to be used in conjunction with the polylactic acid resin include a polyethylene resin, a polypropylene resin, a polystyrene resin and a polyester resin. The use of a biodegradable polyester resin containing at least 35 mole % of aliphatic ester component units, such as a polycondensation product of a hydroxyacid other than lactic acid, a ring open polymerization product of a lactone (e.g. polycaprolactone), a polycondensation product of an aliphatic polyhydric alcohol with an aliphatic polycarboxylic acid (e.g. polybutylene succinate, polybutylene adipate, polybutylene succinate adipate and poly(butylene adipate/terephthalate) is preferred.

The polylactic acid resin may be prepared by any suitable known method such as a method in which lactic acid or a mixture of lactic acid and aliphatic hydroxycarboxylic acid is subjected to a dehydration polycondensation (disclosed, for example, in US-A-5,310,865); a method in which a cyclic dimer of lactic acid (namely lactide) is subjected to ring-open polymerization (disclosed, for example, in US-A-2,758,987); a method in which a cyclic dimer of an aliphatic hydroxycarboxylic acid (e.g. lactide or glycolide) and ε-caprolactone are subjected to ring-open polymerization in the presence of a catalyst (disclosed, for example, in US-A-4,057,537); a method in which lactic acid and a mixture of an aliphatic dihydric alcohol and an aliphatic dibasic acid are subjected to dehydration polycondenation (disclosed, for example, in US-A-5,428,126); a method in which a lactic acid polymer and a polymer of an aliphatic dihydric alcohol and an aliphatic dibasic acid are subjected to condensation in an organic solvent (disclosed, for example, in EP-A-0712880); and a method in which lactic acid is subjected to dehydration polycondensation in the presence of a catalyst, with a step of polymerization in a solid phase being involved during the course of the polycondenation. The above methods may be performed in the presence of a minor amount of an aliphatic polyhydric alcohol (e.g. glycerin), an aliphatic polybasic acid (e.g. butanetetracarboxylic acid) or polyhydric alcohol (e.g. polysaccharide) to obtain a copolymer.

The expanded beads of the present invention have such characteristics in heat flux scanning differential calorimetry that a difference ($\Delta H_{endo:Bead} - \Delta H_{exo:Bead}$) between an endothermic calorific value $\Delta H_{endo:Bead}$ and an exothermic calorific value $\Delta H_{exo:Bead}$ is not less than 0 J/g but less than 30 J/g and that the endothermic calorific value $\Delta H_{endo:Bead}$ is at least 15 J/g. Namely, the expanded beads of the present invention show an endothermic peak in heat flux scanning differential calorimetry. The area of the endothermic peak corresponds to a calorific value (heat of fusion) $\Delta H_{endo:Bead}$ of at least 15 J/g. Further, the expanded beads of the present invention may or may not show an exothermic peak in heat flux scanning differential calorimetry. If such an exothermic peak is not present, the calorific value $\Delta H_{exo:Bead}$ is 0 J/g. If such an exothermic peak is present, the calorific value $\Delta H_{exo:Bead}$ is determined from the area of the exothermic peak. In this case, it is important that a difference ($\Delta H_{endo:Bead} - \Delta H_{exo:Bead}$) between an endothermic calorific value $\Delta H_{endo:Bead}$ and an exothermic calorific value $\Delta H_{exo:Bead}$ is not less than 0 J/g but less than 30 J/g.

The exothermic peak is attributed to a heat generated from the sample as a result of the crystallization thereof during the course of heating at a rate of 2°C/minute in the DSC measurement. The calorific value $\Delta H_{exo:Bead}$ is a heat generated during the crystallization of the sample. The greater is the calorific value $\Delta H_{exo:Bead}$, the lower is the degree of crystallization of the sample. The endothermic peak is attributed to a heat absorbed by the sample as a result of the fusion of the crystals thereof during the course of heating at a rate of 2°C/minute in the DSC measurement. The calorific value $\Delta H_{endo:Bead}$ is a heat required for the fusion of the sample. The greater the calorific value $\Delta H_{endo:Bead}$, the greater is the crystallizability of the expanded beads (therefore, the higher is the capability of showing excellent heat resistance in a foamed molding obtained from the expanded beads). The difference ($\Delta H_{endo:Bead} - \Delta H_{exo:Bead}$) represents a heat of fusion of the crystals originally contained in the expanded bead sample before the DSC measurement. The smaller the difference ($\Delta H_{endo:Bead} - \Delta H_{exo:Bead}$) is, the lower is the degree of crystallization of the expanded beads.

When the difference ($\Delta H_{endo:Bead} - \Delta H_{exo:Bead}$) is 30 J/g or more, a foamed molding obtained by filling and heating the expanded particles in a mold has a defect that they are not sufficiently fuse-bonded to each other or an appearance of the molding is not good because of shrinkage thereof. The difference ($\Delta H_{endo:Bead} - \Delta H_{exo:Bead}$) is preferably in the range of 5 -25 J/g, more preferably in the range of not less than 5 J/g but less than 15 J/g for reasons that the expanded beads show good moldability and give a molding having excellent fuse-bonding between the beads, excellent dimensional stability, excellent appearance and excellent mechanical strengths. In the present invention, the smaller the difference ($\Delta H_{endo:Bead} - \Delta H_{exo:Bead}$) is, the lower can be the temperature at which the expanded beads are heated in a mold for the production of foamed moldings. However, when the difference is extremely small, there is a possibility that the temperature control in the molding step becomes difficult and that it is not easy to prepare foamed moldings with a uniform degree of shrinking.

The endothermic calorific value $\Delta H_{endo:Bead}$ of the expanded beads should be at least 15 J/g in order to obtain a foamed molding having satisfactory heat resistance. The endothermic calorific value $\Delta H_{endo:Bead}$ is preferably not smaller than 15 J/g but not greater than 40 J/g, more preferably not smaller than 15 J/g but less than 30 J/g, most preferably not smaller than 20 J/g but less than 30 J/g, for reasons of moldability of the expanded beads in a mold. When the endothermic calorific value $\Delta H_{endo:Bead}$ of the expanded beads is less than 15 J/g, a foamed molding obtained therefrom has insufficient heat resistance so that shrinkage or dimensional changes are apt to occur. On the other hand, excessively too large a $\Delta H_{endo:Bead}$ value tends to give a foamed molding having poor appearance because of shrinkage of the molding or insufficient fuse-bonding between beads.

The exothermic calorific value $\Delta H_{exo:Bead}$ of the expanded beads is preferably 3-25 J/g, more preferably 8-23 J/g, most preferably 10-20 J/g, for reasons of good fuse-bonding efficiency of the beads at the time of molding in a mold and surface smoothness of the foamed molding obtained therefrom.

The terms "endothermic calorific value $\Delta H_{endo:Bead}$" and "exothermic calorific value $\Delta H_{exo:Bead}$" as used herein are determined from DSC curve of heat flux differential scanning calorimetry in accordance with JIS K7122-1987. The DSC measurement is carried out as follows. A sample (about 1 to 4 mg) of an expanded bead (if necessary, two or more beads or a portion cut from the bead may be used) is charged in a pan of a differential scanning calorimeter. The DSC curve is measured while heating the sample at 2°C/minute from 40°C to 200°C to melt the sample.

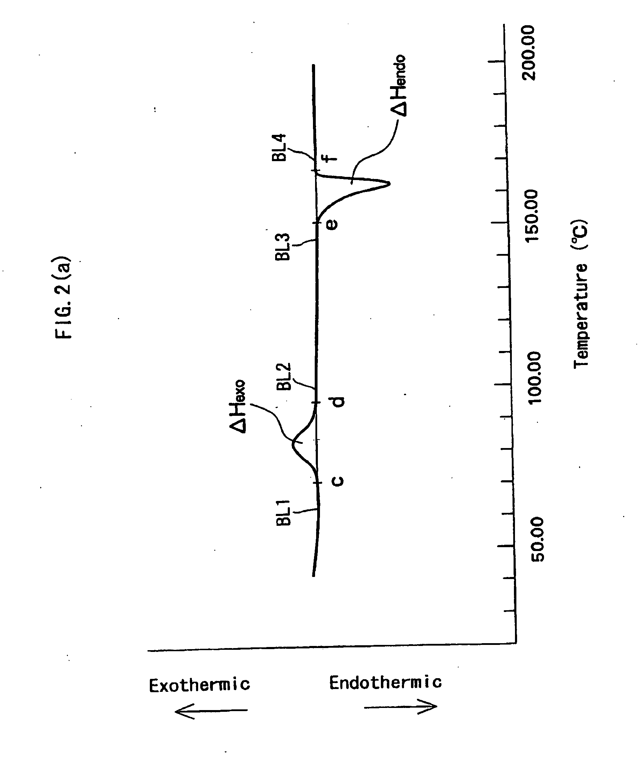

FIG. 2(a) depicts an example of such a DSC curve. In FIG. 2(a), there is an exothermic peak which begin from a point "c" where the DSC curve begins separating from a low temperature-side base line BL1 and which terminate at a point "d" where the DSC curve returns to a high temperature-side base line BL2. The exothermic calorific value $\Delta H_{exo:Bead}$ is an integration of the exothermic peak area, namely the area defined by a line passing the points "c" and "d" and the exothermic curve. There is also an endothermic peak which begin from a point "e" where the DSC curve begins separating from a low temperature-side base line BL3 and which terminate at a point "f" where the DSC curve returns to a high temperature-side base line BL4. The endothermic calorific value $\Delta H_{endo:Bead}$ is an integration of the endothermic peak area, namely the area defined by a line passing the points "e" and "f" and the endothermic curve. The DSC device should be preferably operated so that each of the base lines BL1 through BL4 is straight as shown in FIG. 2(a). When the base line or lines are inevitably curved, the points "c" to "f" are determined in the same manner as described with reference to FIG. 1(b). For example, when the base lines BL1 and BL2 are curved, the curved base lines BL1 and BL2 are extended to the high temperature side and low temperature side, respectively, with the radius of the curvature of the base lines being maintained. The point at which the DSC curve begins separating from the curved base line BL1 is the point "c". The point "d" is a point where the DSC curve returns to a curved base line BL2 on the high temperature-side. Similarly, the points "e" and "f" are points where the DSC curve begins separating from the curved base line BL3 and where the DSC curver returns to a curved base line BL4, respectively.

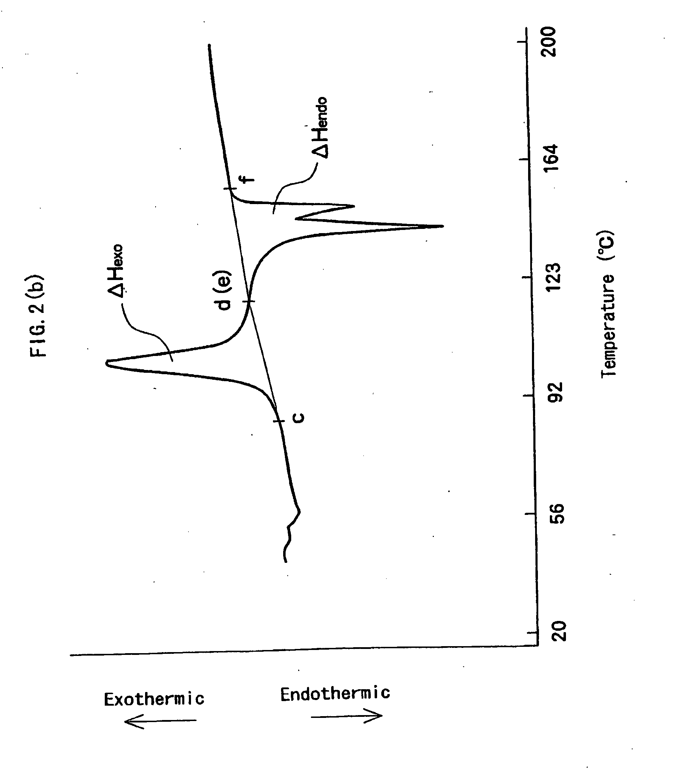

When the exothermic and endothermic peaks are not separated from each other as shown in FIG. 2(b), the points "c" and "f" are first determined in the same manner as that in FIG. 2(a). Then, the intersection between a line passing the points "c" and "f" and the DSC curve is assigned as point "d(e)". The exothermic calorific value $\Delta H_{exo:Bead}$ is an area defined by a line passing the points "c" and "d(e)" and the exothermic curve, while the endothermic calorific value $\Delta H_{endo:Bead}$ is an area defined by a line passing the points "d(e)" and "f" and the endothermic curve.

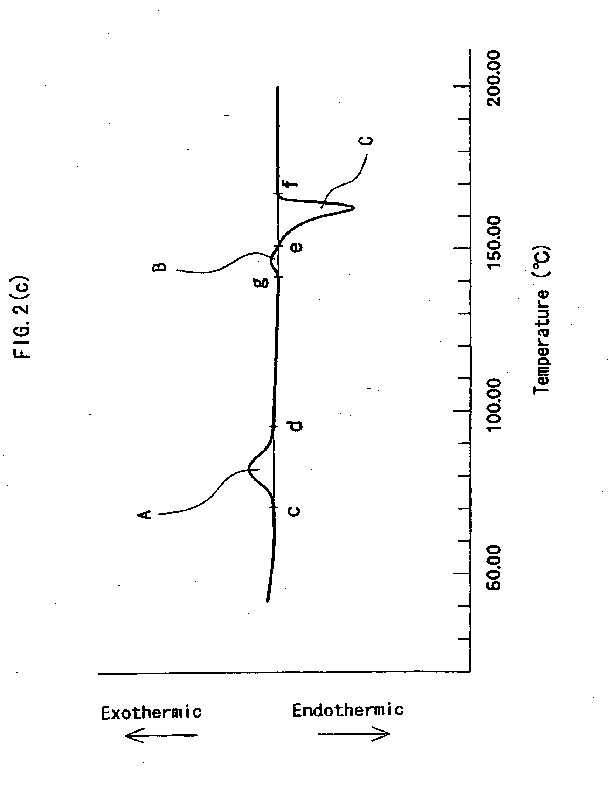

When there are two or more exothermic and/or endothermic peaks, the exothermic calorific value $\Delta H_{exo:Bead}$ and/or the endothermic calorific value $\Delta H_{endo:Bead}$ are each a total of the area of respective peaks. For example, when there are two, first and second exothermic peaks A and B and one endothermic peak C and when the peaks B and C are continuous, as shown in FIG. 2(c), the exothermic calorific value $\Delta H_{exo:Bead}$ is a sum of an area defined by a line passing through points "c" and "d" and the first exothermic peak A and an area defined by a line passing through points "g" and "e" and the second exothermic peak B. In this case, the points "c" and "d" are similar to those in FIG. 2(a), while the points "g" and "e" are similar to the points "c" and "d(e)" in FIG. 2(b). Thus, the point "e" in FIG. 2(c) is an intersection between a line passing the points "g" and "f" and the DSC curve. The endothermic calorific value $\Delta H_{endo:Bead}$ is an area defined by the line passing the points "e" and "f" and the endothermic peak C.

In the above-described heat flux differential scanning calorimetry, a heating rate of 2°C/minute has been found to be suitable for obtaining a DSC curve in which endothermic and exothermic peaks are independently present and for measuring precise endothermic and exothermic calorific values $\Delta H_{endo:Bead}$ and $\Delta H_{exo:Bead}$.

The endothermic calorific value $\Delta H_{endo:Bead}$ basically depends upon the crystallizability and crystallization rate of the resin from which the expanded beads are formed. In the present invention, the polylactic acid resin contains a crystalline polylactic acid resin. Namely, the polylactic acid resin may be (a) composed only of a crystalline polylactic acid resin, (b) a mixture of a crystalline polylactic acid resin and a non-crystalline polylactic acid resin. For reasons of easiness of controlling the endothermic and exothermic calorific values $\Delta H_{endo:Bead}$ and $\Delta H_{exo:Bead}$, the use of mixture (b) is preferred. In this case, it is preferred that the mixture (b) contain at least 35 % by weight, more preferably 45-80 % by weight of a crystalline polylactic acid resin for reasons of obtaining a foamed molding having well balanced heat resistance and moldability. Excessively high content of a crystalline polylactic acid resin might cause insufficient fuse-bonding of beads of a foamed molding when the crystallization degree thereof is high, namely when the crystallization of the polylactic acid resin proceeds in a high degree. On the other hand, when the content of the crystalline polylactic acid resin is excessively small, the expanded beads might produce a foamed molding having insufficient heat resistance.

The endothermic calorific value $\Delta H_{endo:Bead}$ may be controlled by (a) a method in which a crystalline polylactic acid resin having the specific $\Delta H_{endo:Bead}$ is selected, (b) a method in which two or more crystalline polylactic acid resins having different degrees of crystallizability are selected and used in combination to obtain the specific $\Delta H_{endo:Bead}$, and (c) a method in which one or more crystalline polylactic acid resins and one or more non-crystalline polylactic acid resins are selected and used in combination to obtain the specific $\Delta H_{endo:Bead}$. The method (c) is particularly preferably used in the present invention.

The term "crystalline polylactic acid resin" as used herein is intended to refer to a polylactic acid resin which shows such an endothermic peak in heat flux scanning differential calorimetry that the endothermic calorific value (heat of fusion) $\Delta H_{endo:Material}$ is more than 2 J/g. The crystalline polylactic acid resin generally has $\Delta H_{endo:Material}$ of 20-65 J/g. The term "non-crystalline polylactic acid resin" as used herein is intended to refer to a polylactic acid resin which shows such an endothermic peak in heat flux scanning differential calorimetry that the endothermic calorific value (heat of fusion) $\Delta H_{endo:Material}$ is 2 J/g or less, or a polylactic acid resin which shows no endothermic peak in heat flux scanning differential calorimetry.

The exothermic calorific value $\Delta H_{exo:Bead}$ of expanded beads varies depending upon the thermal history thereof. Thus, the exothermic calorific value $\Delta H_{exo:Bead}$ of expanded beads can be controlled by controlling, for example, the conditions under which the resin particles, which are precursor particles for the preparation of the expanded beads, are cooled after extrusion, the conditions under which the resin particles are impregnated with a blowing agent, and the conditions under which the resin particles are expanded. More particularly, the exothermic calorific value $\Delta H_{exo:Bead}$ increases when the resin particles after extrusion are rapidly cooled. On the other hand, the exothermic calorific value $\Delta H_{exo:Bead}$ will decrease by an increase of the temperature at which the blowing agent is impregnated in the resin particles or by an increase of a time for heating the resin particles for expansion. By suitably combining these controlling methods, desired exothermic calorific value $\Delta H_{exo:Bead}$ can be obtained. Therefore, the difference ($\Delta H_{endo:Bead} - \Delta H_{exo:Bead}$) may be also suitably controlled by suitably selecting the crystallizability and crystallization speed of the polylactic acid resin, conditions under which resin particles are produced, conditions under which the resin particles are impregnated with a blowing agent, and conditions under which the resin particles are foamed and expanded.

The expanded beads according to the present invention may be suitably prepared by the following method. Resin particles used as a raw material for the production expanded beads are first prepared by any suitable known method. For example, a base resin containing as an essential ingredient a polylactic acid resin is charged, mixed and kneaded in an extruder at a temperature sufficient to melt the base resin. The kneaded mass is then extruded through a die into strands. The strands are immersed in water for quenching and cut to obtain the resin particles. If desired, the cutting may be preceded by or simultaneous with the quenching. In an alternative, the kneaded mass is extruded into a block or a plate and is cooled using a cooling press or by immersing in water for quenching. The cooled block or plate is ground or cut to obtain the resin particles. It is preferred that the above cooling step in the production of the resin particles be performed by quenching (such as by immersion in water) for reasons of easiness in adjusting $\Delta H_{exo:Bead}$ and ($\Delta H_{endo:Bead} - \Delta H_{exo:Bead}$) of expanded beads produced from the resin particles.

The weight per particle of the resin particles is generally 0.05-10 mg, preferably 0.1-4 mg. It is not easy to prepare resin particles having excessively small weight. When the weight per particle is excessively large, there is a possibility that the particle is not uniformly impregnated with a blowing agent and that the density of the expanded particle in a center part is higher than that in a surface part. The shape of the resin particles is not specifically limited and may be sphere, ellipsoid, solid cylinder, polygonal prism, cube or any other desired shape.

When the resin particles are produced by kneading the base resin with an extruder, followed by extrusion into strands, it is preferable to dry the base resin before kneading for reasons of prevention of degradation of the base resin by hydrolysis. It is also preferable to use an extruder provided with a vent hole so that moisture may be removed from the base resin during kneading by evacuation through the vent hole.

A coloring agent of black, gray, brown, blue, green or any desired color may be incorporated into the base resin so as to color the resin particles. The use of colored resin particles can give colored expanded beads and colored foamed moldings. The coloring agent may be any customarily employed inorganic or organic pigment or dye.

The base resin may also be blended with a foam controlling agent which may be an inorganic powder such as talc, calcium carbonate, borax, zinc borate or aluminum hydroxide. When the base resin is mixed with additives such as a pigment, a dye and an inorganic powder, the additives may be kneaded as such together with the base resin. Alternatively, the additives may be previously mixed to obtain a master batch. By kneading the base resin with the master batch, the additives may be uniformly dispersed in the base resin. The amount of the coloring agent varies with a color but is generally 0.001-5 parts by weight per 100 parts by weight of the base resin. The amount of the inorganic powder is generally in the range of 0.001-5 parts by weight, preferably 0.02-1 part by weight, per 100 parts by weight of the base resin. In view of the fact that foamed moldings formed of the above base resin are disposed of, the amount of the additives is desired to be as small as possible. The inorganic powder can serve to improve the expansion ratio of the expanded beads obtained from the resin particles. As the additives, there may be further used a fire retardant, an antistatic agent or a weathering agent.

The resin particles thus obtained is suitably stored in low temperature and low humidity environment so as to prevent the hydrolysis of the base resin.

In expanding the resin particles, a blowing agent is first impregnated in the resin particles. The blowing agent may be an organic physical blowing agent or an inorganic physical blowing agent. Examples of the organic physical blowing agents include propane, butane, pentane, hexane, 1,1,1,2-tetrafluoroethane, 1-chloro-1,1-difluoroethane and 1,1-difluoroethane. Examples of inorganic physical blowing agents include air, nitrogen, carbon dioxide and argon. For reasons of low costs and freedom of environmental problem, the use of inorganic physical blowing agent, especially air, nitrogen or carbon dioxide is preferred. Above all, the use of carbon dioxide as the blowing agent is most preferred, since carbon dioxide may be efficiently impregnated in the polylactic acid resin particles and since expanded beads having a small apparent density may be obtained even with a small amount of the blowing agent. Whilst the use of a physical blowing agent is preferred, a chemical blowing agent may be used, if desired. In such a case, the chemical blowing agent is added to the resin particles during the production of the resin particles using an extruder.

Description will be next made of a method of impregnating the resin particles with carbon dioxide to obtain expandable resin particles.

In one preferred method (first method), resin particles are charged in a closed vessel, such as an autoclave, to which carbon dioxide is fed under a pressure for impregnation into the resin particles under a controlled temperature. In another preferred method (second method), resin particles are charged in a closed vessel, such as an autoclave, together with a dispersing medium such as water. While stirring the dispersion medium at a predetermined temperature, carbon dioxide is fed to the autoclave to impregnate the resin particles with carbon dioxide.

In the above first and second methods, carbon dioxide is charged into the autoclave so that the pressure of carbon dioxide in the autoclave is in the range of 0.5-10 MPa(G). The impregnation temperature is generally 5-60°C, preferably 5-40°C. The impregnation temperature is a temperature of the atmosphere within the autoclave in which the resin particles are charged, when the first method without using a dispersing medium is adopted. In the second method, the impregnation temperature is the temperature of the dispersing medium contained in the autoclave. The impregnation time in the first and second methods is generally 10 minutes to 24 hours, preferably 20 minutes to 12 hours.

The above methods are generally performed so that the amount of carbon dioxide impregnated in the resin particles is 2.5-30 % by weight, preferably 3-20 % by weight, for reasons of sufficiently expanding the resin particles with a desired expansion ratio while preventing excessive crystallization of the polylactic acid resin during the impregnation stage. As described previously, when the degree of crystallization of the polylactic acid resin is excessively high, there is a possibility that the expanded beads fail to sufficiently fuse and inflate during the molding stage.

It is preferred that the impregnation temperature be not higher than (-2.5X + 55)°C where X represents a desired percentage of carbon dioxide impregnated in the resin particles, since, even when a highly crystalline polylactic acid resin is used, crystallization degree thereof can be suppressed so that the resin particles can expand with a desired expansion ratio and the expanded beads obtained therefrom can suitably fuse and inflate during the molding stage.

The percentage (X) of carbon dioxide impregnated in the resin particles may be obtained from the following formula:

$$X \text{ (\% by weight)} = Wc/(Wc + Wr) \times 100$$

wherein $Wc$ represents a weight (g) of the carbon dioxide impregnated in the resin particles and $Wr$ is a weight (g) of the resin particles before impregnation. The weight $Wc$ of the carbon dioxide impregnated in the resin particles may be determined as a difference between the weight of the resin particles after the impregnation and the weight of the resin particles before the impregnation. The weight should be measured precisely to the fourth decimal place (0.0001 g).

The thus obtained expandable resin particles impregnated with a blowing agent are then expanded to obtain expanded beads. A foamed molding may be obtained by molding the expanded beads in a mold, i.e. by filling and heating the expanded beads in the mold to fuse bond the expanded beads together. The expansion of the expandable resin particles may be performed by heating the expandable resin particles with a suitable heating medium such as steam, air or nitrogen having a controlled temperature. A steam-air mixed gas may be preferably used. The expansion may be carried out in any suitable known method. In one preferred method, the expandable resin particles are placed in a closed vessel, to which a heating medium is then fed for expansion of the expandable resin particles. The closed vessel is preferably provided with a valve so that a part of the heating medium is continuously discharged from the closed vessel through the valve to maintain the temperature within the closed vessel at constant.

The temperature of the atmosphere for heating the expandable resin particles impregnated with the blowing agent, i.e. expansion temperature, is generally between (Tg - 30°C) and (Tg + 60°C), preferably between (Tg - 10°C) and (Tg + 40°C), where Tg is a glass transition temperature of the polylactic acid resin from which the resin particles are formed, so that the expanded beads obtained have a suitable expansion ratio and a suitable closed cell content.

The "glass transition point" as used herein is measured in accordance with JIS K7121-1987 and is calculated from the midpoint of a heat flux of a DSC curve obtained by heat flux differential scanning calorimetry at a heating rate of 10°C/minute. The "glass transition point is measured after the sample has been heat treated under specified conditions" as described in JIS K7121-1987, Paragraph 3, Control of conditions of sample (3). Namely, a sample is placed in a pan of a DSC device and heated to 200°C at a heating rate of 10°C/minute and maintained at 200°C for 10 minutes. The melted sample is then cooled to 0°C at a cooling rate of 10°C/minute. The resulting sample is then subjected to the DSC measurement.

The thus obtained expanded beads are desirably stored under conditions so that hydrolysis of the resin is prevented to occur. Thus, high temperature and high humidity environment should be preferably avoided. The expanded beads of the present invention preferably have an apparent density of 0.015 to 0.3 $g/cm^3$, more preferably 0.015 to 0.2 $g/cm^3$, most preferably 0.015 to 0.08 $g/cm^3$. When the apparent density is excessively high, there is a possibility that the density of the expanded beads is not uniform and, therefore, the inflation efficiency and fuse-bonding efficiency of the beads vary from each other. This may result in a foamed molding having unsatisfactory physical properties. Too small an apparent density of the beads, namely too high an expansion ratio of the beads, will cause a difficulty in obtaining a foamed molding without large shrinkage. The apparent density is obtained by dividing the weight $W1$ (g) of the expanded beads by the volume $V1$ ($cm^3$) of the apparent volume thereof. The apparent volume is measured as follows:

In a measuring cylinder, a quantity ($W1$ g) of expanded beads (500 or more beads) are allowed to stand at 23°C for 48 hours in the atmosphere under a relative humidity of 50 % and thereafter immersed in water contained in a graduation cylinder at 23°C using a wire net. From the increment of the volume, the apparent volume (V1) can be determined.

The average cell diameter of the expanded beads is preferably 10-800 $\mu$m, more preferably 30-500 $\mu$m, for reasons of suitable mechanical strength of the walls defining the cells of the expanded beads. When the average cell diameter is excessively small, there is a possibility that the cell walls are broken during molding due to low strengths thereof. Thus, even when the molding is aged, there is a possibility that the shape recovery is not sufficiently attained. When the average cell diameter is excessively large, on the other hand, there is a possibility that the beads are not sufficiently inflated during the molding and that the molding fails to have good surface smoothness.

The term "average cell diameter of the expanded beads" as used herein is as measured as follows:

An expanded bead is cut into nearly equal halves. The cut surface is observed to measure the maximum diameter of each of the cells appearing thereon, from which an arithmetic mean is calculated. Similar procedure is performed for N-number (N is 10 or more) of arbitrary expanded beads. The average cell diameter is an average of the N-number of beads.

A foamed molding obtainable by molding the above expanded beads according to the present invention in a mold is high in fuse-bonding between beads. Namely, the foamed molding has a flexural strength of A [N/cm$^2$] and a density of B [g/cm$^3$], wherein the ratio of A/B is at least 294 N·cm/g, preferably at least 490 N·cm/g, more preferably at least 686 N·cm/g. The higher the A/B ratio, the greater is the fuse-bonding between beads. The upper limit of the A/B ratio of the foamed molding of the present invention varies depending upon the density of the foamed molding but is generally about 1,470 N·cm/g.

The term "flexural strength" as used herein is intended to be the maximum bending strength measured in accordance with JIS K7221-1984. A sample of a molding having a length of 150 mm, a width of 25 mm and a thickness of 10 mm is prepared such that one of the two opposing surfaces having a length of 150 mm and a width of 25 mm is a cut surface formed by cutting the molding, while the other surface being as molded surface (skin of the molding). With the as molded surface of the sample orienting downward, the sample is subjected to bending test.

The foamed molding of the present invention preferably shows such heat flux scanning differential calorimetric characteristics that a difference ($\Delta H_{endo:Mold}-\Delta H_{exo:Mold}$) between an endothermic calorific value $\Delta H_{endo:Mold}$ and an exothermic calorific value $\Delta H_{exo:Mold}$ is not less than 15 J/g, more preferably not less than 20 J/g, most preferably not less than 25 J/g. The upper limit of the difference ($\Delta H_{endo:Mold}-\Delta H_{exo:Mold}$) is generally 60 J/g.

The difference ($\Delta H_{endo:Mold}-\Delta H_{exo:Mold}$) of the foamed molding may be controlled by aging the foamed molding. Thus, by maintaining the foamed molding as obtained after the molding at a temperature higher than the glass transition temperature of the polylactic acid resin constituting the molding but not higher than a temperature at which the foamed molding deforms, the difference ($\Delta H_{endo:Mold}-\Delta H_{exo:Mold}$) of the foamed molding may be increased. The aging temperature is preferably between (Tg + 5°C) and (Tg + 60°C), more preferably between (Tg + 5°C) and (Tg + 30°C), wherein Tg is the glass transition temperature of the polylactic acid resin constituting the molding. The aging time for which the foamed molding is maintained is preferably 5-1,500 minutes, more preferably 60-1,000 minutes. The aging step may be carried out continuously in the mold in which the foamed molding has been prepared. Alternately, the foamed molding may be taken out of the mold, placed in an aging chamber and then aged in the chamber.

The endothermic calorific value $\Delta H_{endo:Mold}$ and exothermic calorific value $\Delta H_{exo:Mold}$ of the foamed molding may be measured in accordance with JIS K7122-1987. Except that a sample (1-4 mg) is cut out from the foamed molding, the DSC measurement is carried out in the same manner as that for the above-described measurement of endothermic calorific value $\Delta H_{endo:Bead}$ and exothermic calorific value $\Delta H_{exo:Bead}$ of the expanded beads.

The foamed molding according to the present invention is preferably prepared by heating the expanded beads filled in a mold with a suitable heating medium, such as steam or hot air, having a temperature sufficient to fuse the surfaces of the expanded beads. As a result of the above heating, the expanded beads are fuse-bonded together to form an integral foamed molding. As the mold, there may be used a customarily employed metal molds or a continuous molding machine having a running steel belt as disclosed in US-A-5968430.

It is preferred that the expanded beads be treated before molding so that the pressure inside of the cells thereof is increased. Such a pretreatment may be carried out by allowing the beads to stand for a suitable period of time in a closed vessel to which a pressurized gas has been fed. The gas may be an inorganic gas such as nitrogen, air or carbon dioxide and an organic gas such as butane. By increasing the inside pressure of the expanded beads, the foaming efficiency and adhesion strength of the expanded beads may be improved and shape recovery of the foamed molding obtained may be improved.

The amount of gas increased as a result of the pretreatment is preferably 0.3-4 mol, more preferably 0.7-4 mol, per 1000 g of the expanded beads The amount of gas increased Wi (mol/1000 g expanded beads) is defined by the following formula:

$$Wi = (Wg \times 1000)/(Mw \times Wb)$$

wherein

Wg is a weight (g) of the gas increased,
Mw is a molecular weight (g/mol) of the gas, and
Wb is a weight (g) of the expanded beads;

and may be measured as follows:

A quantity of expanded beads (more than 500 beads) which are to be filled in a mold for molding and which have been just pressurized with a gas (molecular weight: Mw) in a vessel are placed, within 60 seconds after the take-out, on a weighing device provided in a thermostatic chamber maintained at 23°C and 50 % relative humidity under ambient pressure. The weight Q (g) of the beads is measured just 120 seconds after the expanded beads have been taken out from the vessel. The expanded beads are then allowed to stand for 240 hours in the chamber at 23°C and 50 % relative humidity under ambient pressure. The gas in the cells of the expanded beads gradually permeates through the cell walls and escapes from the beads. Therefore, the weight of the beads decreases with the lapse of time. However, an equilibrium has been established and the weight decrease no longer occurs after lapse of the 240 hours period. Thus, the weight of the expanded beads S (g) is measured in the same chamber after the lapse of the 240 hours period. The measurement of the weight should be carried out precisely to the fourth decimal place (0.0001 g). The balance between the weights Q and S represents the weight of gas increased (Wg = Q - S). The Wb in the above formula is the weight S (g) of the expanded beads after 240 hours.

In the present invention, the expanded beads and foamed molding have a gel fraction of no more than 2 % by weight and preferably 0 % by weight and, therefore, are non-crosslinked. The term "gel fraction" as used herein is as measured by the following method. Sample bead or molding (weight W2; about 1 g) is immersed in 100 ml of chloroform contained in a 150 ml flask and the mixture is refluxed for 10 hours in boiling chloroform at bout 61°C. The mixture is then immediately filtered through a 200 mesh wire net using a vacuum filtration device. The solids on the wire net are dried in an oven at 80°C for 8 hours under a reduced pressure of 30-40 Torr. The dry weight (W3) of the choloroform-insoluble matters left on the wire net is measured. A gel fraction (% by weight) is calculated from the formula:

$$Gel\ fraction\ (\%) = (W3/W2) \times 100$$

The foamed molding according to the present invention may have any desired shape and may be in the form of, for example, a container, a plate, a cylinder, a solid cylinder or rod, a sheet or a block. The density of the foamed molding is preferably 0.01-0.2 g/cm$^3$, more preferably 0.015-0.1 g/cm$^3$. The density may be calculated by dividing the weight WM (g) of the foamed molding by the volume VM (cm$^3$) thereof as determined from the outer dimensions thereof.

The expanded polylactic acid resin beads according to the present invention, which have a specific difference ($\Delta H_{endo:Bead}-\Delta H_{exo:Bead}$) between an endothermic calorific value $\Delta H_{endo:Bead}$ and an exothermic calorific value $\Delta H_{exo:Bead}$ and a specific endothermic calorific value $\Delta H_{endo:Bead}$, exhibit good moldability. In particular, the expanded beads show good fusion-bonding and foamability when they are molded. The foamed molding obtained from the expanded beads has a dimension which is in conformity with the dimension of the mold cavity. Further, the foamed molding is very small in variation of the density and has excellent dimensional stability, cushioning property, surface smoothness and mechanical strengths. Further, because of the specific difference ($\Delta H_{endo:Mold}-\Delta H_{exo:Mold}$) between an endothermic calorific value $\Delta H_{endo:Mold}$ and an exothermic calorific value $\Delta H_{exo:Mold}$, the foamed molding has excellent heat resinstance. Therefore, the foamed molding may be used for various applications, for example, as a cushioning material, a container or a wrapping material. Additionally, because of the biodegradability, the foamed molding may be disposed of without causing environmental problems.

The following examples and comparative examples will further illustrate the present invention.

Examples 1-6 and Comparative Examples 1-4

A mixture of crystalline polylactic acid resin A (LACTY9030 manufactured by Shimadzu Corporation; endothermic calorific value $\Delta H_{endo:Material}$: 37 J/g) and non-crystalline polylactic acid resin B (LACTY9800 manufactured by Shimadzu Corporation; endothermic calorific value $\Delta H_{endo:Material}$: 0 J/g) having a weight ratio (resin A/resin B) as shown in Tables 1-1 and 1-2 was melted and kneaded together with talc in an extruder. The kneaded mixture was then extruded into strands. The strands were immediately introduced in water at about 25°C for quenching and cut to obtain solid cylindrical resin particles each having a diameter of about 1.3 mm, a length of about 1.9 mm and a weight of about 3 mg. The amount of the talc was 2,000 ppm based on the weight of the resin particles.

In a 5 liter autoclave whose inside temperature had been adjusted to a predetermined impregnation temperature as shown in Tables 1-1 and 1-2, 1000 g of the above resin particles were charged. Carbon dioxide ($CO_2$ blowing agent) was then introduced into the autoclave through a pressure controlling valve. The resin particles were impregnated with the blowing agent. The $CO_2$ pressure in the autoclave, impregnation temperature and impregnation time were as shown in Tables 1-1 and 1-2. The pressure within the autoclave was then released to ambient pressure and the resin particles were taken out of the autoclave. The amount of $CO_2$ impregnated in the resin particles was shown in Tables 1-1 and 1-2.

The thus obtained $CO_2$-impregnated resin particles were charged into an autoclave provided with a pressure controlling valve. Steam was then introduced into the autoclave for 5 seconds to heat the resin particles to an expansion temperature as shown in Tables 1-1 and 1-2, so that the resin particles were foamed and expanded to obtain non-crosslinked expanded beads. The physical properties (apparent density, exothermic calorific value $\Delta H_{exo:Bead}$, endothermic calorific value $\Delta H_{endo:Bead}$, $\Delta H_{endo:Bead} - \Delta H_{exo:Bead}$, closed cell content and average cell diameter) of the expanded beads are shown in Tables 1-1 and 1-2. The expanded beads were placed in a vessel, to which pressurized carbon dioxide gas was fed so that the inside pressure of the beads was increased. The amount of $CO_2$ in 1000 g of the beads was as shown in Tables 2-1 and 2-2. The resulting beads were then filled in a mold cavity having a length of 200 mm, a width of 250 mm and a thickness of 12 mm at a compression rate as shown in Tables 2-1 and 2-2. The compression rate is defined by the formula:

$$\texttt{Compression rate (\%) = (V1 - V)/V × 100}$$

wherein V1 represents a bulk volume of the expanded beads charged in the mold cavity and V is the volume of the mold cavity. Steam at a molding temperature shown in Tables 2-1 and 2-2 was then fed to the mold cavity to mold the beads. The resulting molding was taken out of the mold cavity and aged at 30°C for 24 hours under a relative humidity of 10 %. The properties of the molding ($\Delta H_{exo:Mold}$, $\Delta H_{endo:Mold}$, $\Delta H_{endo:Mold} - \Delta H_{exo:Mold}$, dimensional stability, fusion strength between beads, appearance, heat resistance, density (B), flexural strength (A), and A/B ratio) are also summarized in Tables 2-1 and 2-2.

The term "bulk volume of the expanded beads" as used herein is determined as follows.

In a measuring cylinder, a quantity (weight W4 (g)) of the expanded beads are placed to read the volume V2 ($cm^3$) of the beads from the graduation of the cylinder. A bulk density Bd is thus obtained by the formula:

$$\texttt{Bd = W4/V2}$$

The bulk volume of the expanded beads may be obtained by W/Bd wherein W (g) is a total weight of the expanded beads placed in the mold cavity.

Table 1-1

| Example No. | 1 | 2 | 3 | 4 | 5 | 6 |
|---|---|---|---|---|---|---|
| Weight ratio of resin A/resin B | 7/3 | 7/3 | 7/3 | 7/3 | 10/0 | 9/1 |
| Endothermic calorific value of resin particles $\Delta H_{endo:Material}$ (J/g) | 26 | 26 | 26 | 26 | 37 | 34 |
| $CO_2$ pressure (MPa(G)) | 3 | 3 | 4 | 4 | 3 | 3 |
| Impregnation temperature (°C) | 22 | 26 | 28 | 21 | 24 | 22 |
| Impregnation time (hour) | 3.5 | 2 | 1 | 2 | 3.5 | 3.5 |
| Amount of $CO_2$ impregnated (wt.%) | 9.5 | 7.1 | 10.3 | 13.6 | 6.3 | 8.7 |
| Expansion temperature (°C) | 64 | 64 | 66 | 65 | 70 | 70 |
| Apparent density of Expanded Beads (g/cm$^3$) | 0.055 | 0.059 | 0.049 | 0.059 | 0.050 | 0.050 |
| Exothermic calorific value $\Delta H_{exo:Bead}$ (J/g) | 10.5 | 14.1 | 3.7 | 0 | 8.1 | 5.2 |
| Endothermic calorific value $\Delta H_{endo:Bead}$ (J/g) | 24.1 | 24.5 | 25.0 | 24.4 | 32.5 | 30.9 |
| $\Delta H_{endo:Bead} - \Delta H_{exo:Bead}$ (J/g) | 13.6 | 10.4 | 21.3 | 24.4 | 24.4 | 25.7 |
| Closed cell content (%) | 97 | 96 | 96 | 96 | 96 | 96 |

(continued)

| Example No. | 1 | 2 | 3 | 4 | 5 | 6 |
|---|---|---|---|---|---|---|
| Average cell diameter ($\mu$m) | 300 | 420 | 150 | 160 | 270 | 340 |

Table 1-2

| Comparative Example No. | 1 | 2 | 3 | 4 |
|---|---|---|---|---|
| Weight ratio of resin A/resin B | 10/0 | 9/1 | 5/5 | 8/2 |
| Endothermic calorific value of resin particles $\Delta H_{endo:Material}$ (J/g) | 37 | 34 | 18 | 30 |
| $CO_2$ pressure (MPa(G)) | 4 | 3 | 4 | 3 |
| Impregnation temperature (°C) | 21 | 23 | 35 | 23 |
| Impregnation time (hour) | 2 | 5 | 1.5 | 5 |
| Amount of $CO_2$ impregnated (wt.%) | 13.0 | 9.3 | 9.0 | 9.7 |
| Expansion temperature (°C) | 71 | 70 | 54 | 66 |
| Apparent density of Expanded Beads (g/cm$^3$) | 0.113 | 0.067 | 0.062 | 0.072 |
| Exothermic calorific value $\Delta H_{exo:sead}$ (J/g) | 0 | 0.8 | 5.9 | 1.2 |
| Endothermic calorific value $\Delta H_{endo:Bead}$ (J/g) | 33.7 | 31.2 | 14.3 | 32.0 |
| $\Delta H_{endo:Bead} - \Delta H_{exo:Bead}$ (J/g) | 33.7 | 30.4 | 8.4 | 30.8 |
| Closed cell content (%) | 97 | 96 | 96 | 96 |
| Average cell diameter ($\mu$m) | 120 | 180 | 200 | 150 |

Table 2-1

| Example No. | 1 | 2 | 3 | 4 | 5 | 6 |
|---|---|---|---|---|---|---|
| Amount of $CO_2$ in expanded particles (mol/1000g) | 2.0 | 0.8 | 1.7 | 1.9 | 1.7 | 1.8 |
| Compression rate (%) | 33 | 33 | 44 | 44 | 50 | 50 |
| Molding temperature (°C) | 116 | 116 | 118 | 118 | 120 | 118 |
| Exothermic calorific value $\Delta H_{exo:Mold}$ (J/g) | 8.2 | 10.5 | 2.1 | 0 | 6.1 | 4.0 |
| Endothermic calorific value $\Delta H_{endo:Mold}$ (J/g) | 24.3 | 24.5 | 24.9 | 24.4 | 32.4 | 31.0 |
| $\Delta H_{endo:Mold} - \Delta H_{exo:Mold}$ (J/g) | 16.1 | 14.0 | 22.8 | 24.4 | 26.3 | 27.0 |
| Dimensional stability | ○ | ○ | ○ | ○ | ○ | ○ |
| Fusion strength between beads | ◎ | ◎ | ○ | ○ | ○ | ○ |
| Appearance | ○ | ○ | ○ | ○ | ○ | ○ |
| Heat resistance | ○ | ○ | ◎ | ◎ | ◎ | ◎ |
| Density (B) of molding (g/cm$^3$) | 0.048 | 0.063 | 0.060 | 0.063 | 0.060 | 0.070 |
| Flexural strength (A) of molding (N/cm$^2$) | 58.8 | 72.5 | 58.8 | 55.9 | 57.8 | 60.8 |
| A/B ratio (N·cm/g) | 1125 | 1151 | 980 | 887 | 964 | 868 |

Table 2-2

| Comparative Example No. | 1 | 2 | 3 | 4 |
|---|---|---|---|---|
| Amount of $CO_2$ in expanded particles (mol/1000g) | 1.6 | 0.9 | 1.0 | 1.1 |
| Compression rate (%) | 33 | 50 | 33 | 50 |
| Molding temperature (°C) | 118 | 118 | 116 | 118 |
| Exothermic calorific value $\Delta H_{exo:Mold}$ (J/g) | 0 | 0 | 4.3 | 0.3 |
| Endothermic calorific value $\Delta H_{endo:Mold}$ (J/g) | 34.1 | 30.8 | 14.3 | 32.1 |
| $\Delta H_{endo:Mold}$ - $\Delta H_{exo:Mold}$ (J/g) | 34.1 | 30.8 | 10.0 | 31.8 |
| Dimensional stability | ○ | ○ | × | ○ |
| Fusion strength between beads | × | Δ | ○ | Δ |
| Appearance | × | × | × | × |
| Heat resistance | - | - | ○ | - |
| Density (B) of molding (g/cm$^3$) | 0.105 | 0.085 | 0.066 | 0.082 |
| Flexural strength (A) of molding (N/cm$^2$) | - | 13.7 | 71.5 | 18.6 |
| A/B ratio (N·cm/g) | - | 161 | 1084 | 227 |

Example 7

A mixture of crystalline polylactic acid resin A' (LAYCIA H-100 manufactured by Mitsui Chemical Corporation; endothermic calorific value $\Delta H_{endo:Material}$: 49 J/g) and non-crystalline polylactic acid resin B' (LAYCIA H-280 manufactured by Mitsui Chemical Corporation; endothermic calorific value $\Delta H_{endo:Material}$: 0 J/g) having a weight ratio (resin A'/resin B') as shown in Table 3 was melted and kneaded together with talc in an extruder. The kneaded mixture was then extruded into strands. The strands were immediately introduced in water at about 25°C for quenching and cut to obtain solid cylindrical resin particles each having a ratio (L/D) of the length thereof (L) to the diameter thereof (D) of about 1.5 and a weight of about 3 mg. The amount of the talc was 2,000 ppm based on the weight of the resin particles.
The resin particles were processed in the same manner as that in Example 1 except that the impregnation with $CO_2$ was carried out under conditions shown in Table 3. The thus obtained $CO_2$-impregnated resin particles were charged into an autoclave provided with a pressure controlling valve. Steam at 0.05 MPa(G) (65°C) was then introduced into the autoclave for 5 seconds to heat the resin particles, so that the resin particles were foamed and expanded to obtain expanded beads having the properties shown in Table 3.
The expanded beads were placed in a vessel, to which pressurized carbon dioxide gas was fed so that the inside pressure of the beads was increased. The amount of $CO_2$ in 1000 g of the beads was 1.3 mol/1000 g. The resulting beads were then filled in a mold cavity having a length of 200 mm a width of 250 mm and a thickness of 10 mm at a compression rate of 50 %. Steam at a temperature of 125°C (0.127 MPa(G)) was then fed to the mold cavity to mold the beads. The resulting molding was taken out of the mold cavity and aged under various aging conditions. The properties of the molding are summarized in Table 4-1.

Example 8

Resin particles were obtained in the same manner as that described in Example 7. In a 5 liter autoclave containing 3 liters of water as a dispersion medium, 1,000 g of the resin particles were charged. A $CO_2$ gas was then introduced into the autoclave through a pressure controlling valve, and the dispersion medium in which the resin particles were dispersed was stirred so that the resin particles were impregnated with the $CO_2$ blowing agent. The $CO_2$ pressure in the autoclave, impregnation temperature and impregnation time were as shown in Table 3. The pressure within the autoclave was then released to ambient pressure and the resin particles were taken out of the autoclave together with the dispersing medium.
The thus obtained $CO_2$-impregnated resin particles were charged into an autoclave provided with a pressure controlling valve. Steam at 0.05 MPa(G) (65°C) was then introduced into the autoclave for 5 seconds to heat the resin particles, so that the resin particles were foamed and expanded to obtain expanded beads having the properties shown in Table 3.
The expanded beads thus obtained were treated with pressurized carbon dioxide in the same manner as that in Example 7 so that the inside pressure of the beads was increased. The resulting expanded beads were then molded to obtain a molding in the same manner as that in Example 7. The resulting molding was taken out of the mold cavity and aged under various aging conditions. The properties of the molding are summarized in Table 4-2.

Table 3

| Example No. | 7 | 8 |
|---|---|---|
| Resin particles | | |
| Weight ratio of resin A'/resin B' | 50/50 | 50/50 |
| Endothermic calorific value $\Delta H_{endo:Material}$ (J/g) | 25 | 25 |
| $CO_2$ Impregnation Conditions | | |
| Pressure (MPa(G)) | 3 | 2 |
| Temperature (°C) | 10 | 30* |
| Time (hour) | 0.5 | 10 |
| Expanded Beads | | |
| Exothermic calorific value $\Delta H_{exo:Bead}$ (J/g) | 15 | 19 |
| Endothermic calorific value $\Delta H_{endo:Bead}$ (J/g) | 28 | 26 |
| $\Delta H_{endo:Bead}$ - $\Delta H_{exo:Bead}$ (J/g) | 13 | 7 |
| Apparent density (g/cm$^3$) | 0.100 | 0.061 |
| Closed cell content (%) | 97 | 97 |
| Average cell diameter (μm) | 390 | 370 |
| * temperature of water | | |

Table 4-1

| Example No. | 7 | | | | |
|---|---|---|---|---|---|
| Exothermic calorific value $\Delta H_{exo:Mold}$ (J/g) before aging | 7 | 7 | 7 | 7 | 7 |
| Endothermic calorific value $\Delta H_{endo:Mold}$ (J/g) before aging | 28 | 28 | 28 | 28 | 28 |
| $\Delta H_{endo:Mold}$ - $\Delta H_{exo:Mold}$ (J/g) before aging | 21 | 21 | 21 | 21 | 21 |
| Aging temperature (°C) | 70 | 70 | 70 | 80 | 80 |
| Aging time (hour) | 6 | 12 | 24 | 6 | 12 |
| Aging R. H. (%) | 10 | 10 | 12 | 8 | 8 |
| Exothermic calorific value $\Delta H_{exo:Mold}$ (J/g) after aging | 3 | 2 | 1 | 0 | 0 |
| Endothermic calorific value $\Delta H_{endo:Mold}$ (J/g) after aging | 28 | 28 | 28 | 28 | 28 |
| $\Delta H_{endo:Mold}$ - $\Delta H_{exo:Mold}$ (J/g) after aging | 25 | 26 | 27 | 28 | 28 |
| Dimensional stability | ○ | ○ | ○ | ○ | ○ |
| Fusion strength between beads | ○ | ○ | ○ | ○ | ○ |
| Heat resistance | ◎ | ◎ | ◎ | ◎ | ◎ |
| Appearance | ○ | ○ | ○ | ○ | ○ |
| Density (B) of molding (g/cm$^3$) | 0.126 | 0.126 | 0.126 | 0.126 | 0.126 |
| Flexural strength (A) of molding (N/cm$^2$) | 133.1 | 133.7 | 133.4 | 133.1 | 132.9 |

(continued)

| Example No. | 7 | | | | |
|---|---|---|---|---|---|
| A/B ratio (N·cm/g) | 1056 | 1061 | 1059 | 1056 | 1055 |

Table 4-2

| Example No. | 8 | | |
|---|---|---|---|
| Exothermic calorific value $\Delta H_{exo:Mold}$ (J/g) before aging | 11 | 11 | 11 |
| Endothermic calorific value $\Delta H_{endo:Mold}$ (J/g) before aging | 26 | 26 | 26 |
| $\Delta H_{endo:Mold}$ - $\Delta H_{exo:Mold}$ (J/g) before aging | 15 | 15 | 15 |
| Aging temperature(°C) | 30 | 70 | 70 |
| Aging time (hour) | 12 | 24 | 12 |
| Aging R. H. (%) | 10 | 10 | 10 |
| Exothermic calorific value $\Delta H_{exo:Mold}$ (J/g) after aging | 11 | 3 | 3 |
| Endothermic calorific value $\Delta H_{endo:Mold}$ (J/g) after aging | 26 | 26 | 26 |
| $\Delta H_{endo:Mold}$ - $\Delta H_{exo:Mold}$ (J/g) after aging | 15 | 23 | 23 |
| Dimensional stability | ○ | ○ | ○ |
| Fusion strength between beads | ○ | ○ | ○ |
| Heat resistance | ○ | ◎ | ◎ |
| Appearance | ○ | ○ | ○ |
| Density (B) of molding (g/cm$^3$) | 0.053 | 0.053 | 0.053 |
| Flexural strength (A) of molding (N/cm$^2$) | 54.8 | 53.9 | 54.2 |
| A/B ratio (N·cm/g) | 1034 | 1017 | 1023 |

Methods of measurement of the physical properties and evaluation methods shown in the tables are as follows.

Closed Cell Content:

Closed cell content of expanded beads is measured in accordance with the method described in ASTM-D2856-70, Procedure C. True volume of the expanded beads Vx is measured using Air Comparison Pycnometer Type-930 manufactured by Toshiba Beckmann Inc. (In a measuring cylinder, a quantity of the expanded beads are placed to read a volume 12.5 cm$^3$ from the graduation of the cylinder. The measured beads are placed in a sample cup for measurement). The closed cell content S (%) is calculated according to the formula below.

$$S\ (\%) = (Vx - W/\rho) \times 100\ /\ (Va - W/\rho)$$

where

Vx: is a true volume (cm$^3$) of the sample of the expanded beads measured according to the above method and corresponds to a sum of a volume of the resin constituting the sample of the expanded beads and a total volume of closed cells of the sample of the expanded beads;
Va: is an apparent volume (cm$^3$) of the sample of the expanded beads used for the measurement. The apparent volume is determined as follows. The sample of the expanded beads are immersed in predetermined amount of water contained in a measuring cylinder. From the increment of the volume as measured from the graduation cylinder, the apparent volume is determined;
W: is a weight (g) of the sample of the expanded beads used for the measurement; and
$\rho$: is a density (g/cm$^3$) of the resin constituting the sample of the expanded beads.

Fusion strength:

A sample having a length of 100 mm, a width of 30 mm and a thickness of 10 mm is cut out from the molding. The sample is then transversely bent and cracked by grasping both longitudinal ends. The cracked surface is observed to count the number (b) of the expanded beads which have been broken as a result of the crack. The ratio of the number of the broken cells (b) relative to the total cell (n) present on the cracked surface is calculated. The larger the b/n ratio, the better is fusion strength. The fusion strength is rated as follows.

⊚: (excellent) b/n is 0.5 or more
○: (good) b/n is smaller than 0.5 but not smaller than 0.2
Δ: (no good) b/n is smaller than 0.2 but greater than 0
✕: (bad) b/n is 0

Dimensional stability:

The molding produced in the mold cavity having a length of 200 mm, a width of 250 mm and a thickness of 12 mm or 10 mm is aged at 30°C for 24 hours. The longitudinal length (X) along the bisecting line of the aged molding (corresponding to the 250 mm length of the mold cavity) is measured. Shrinkage is then calculated according to the following formula:

$$\text{Shrinkage (\%)} = [(250 - X)/250] \times 100$$

The dimensional stability is evaluated according to the following ratings:

○: (good) shrinkage is 5 % or less
✕: (no good) shrinkage is more than 5 %

Appearance:

The surface appearance of the molding is evaluated with naked eyes as follows:

○: (good) good replica having smooth surface is obtained
✕: (no good) significant depressions are present on the surface of the molding, especially in portions between foamed beads

Heat resistance:

A sample having a length of 150 mm, a width of 150 mm and a thickness of 10 mm is cut out from the foamed molding. Three parallel vertical lines spaced an equidistance of 50 mm from each other and each having a length of 100 mm and another three parallel lateral lines spaced an equidistance of 50 mm from each other and each having a length of 100 mm are drawn on one side of the cut sample so that a square having a side length of 100 mm and divided into four equal squares is drawn at a center of the cut sample. The sample is heated in an oven at 60°C and 80°C for 22 hours in accordance with the test method described in JIS K6767-1976, Paragraph 5.7, "Variation of Dimension by Heating". The length of each of the 6 lines (100 mm before the heating) is measured, from which an average length X' of the six lines after the heating is determined.

The change of dimension CD at 60°C and 80°C is calculated according to the following equation:

$$\text{CD (\%)} = [(X'-100)/100] \times 100$$

The heat resistance is evaluated according to the following ratings:

⊚: (excellent): -2 % < CD (at 80°C) < 2 %
○: (good): -2 % < CD (at 60°C) < 2 %
Δ: (no good): -5 % < CD (at 60°C) ≤ -2 % or
    2% ≤ CD (at 60°C) < 5 %

$\times$: (bad): CD (at 60°C) $\leq$ -5 % or CD (at 600C) $\geq$ 5 %

Endothermic and Exothermic Calorific Values:

The DSC analysis for the measurement of the exothermic and endothermic peaks was carried out using Shimadzu Heat Flux Differential Scanning Calorimeter DSC-50 (manufactured by SHIMADZU corporation) and a data analyzing software (Partial Area Analyzing Program version 1.52 for Shimadzu Thermoanalysis Work Station TA-60WS).

**Claims**

1. A non-crosslinked polylactic acid resin expanded bead comprising a base resin containing at least 50 % by weight of a polylactic acid resin which contains at least 50 mole % of lactic acid units and which includes a crystalline polylactic acid resin,
said bead having such characteristics in heat flux scanning differential calorimetry that a difference ($\Delta H_{endo\text{-}Bead}$-$\Delta H_{exo:Bead}$) between an endothermic calorific value $\Delta H_{endo:Bead}$ and an exothermic calorific value $\Delta H_{exo:Bead}$ is not less than 5 J/g but less than 30 J/g and that the endothermic calorific value $\Delta H_{endo:Bead}$ is at least 15 J/g,
said bead having an average cell diameter of 10 to 800 $\mu$m, and
wherein the endothermic calorific value $\Delta H_{endo:Bead}$ and exothermic calorific value $\Delta H_{exo:Bead}$ are determined from DSC curve of heat flux differential scanning calorimetry and the DSC measurement is carried out by charging a sample (about 1 to 4 mg) of an expanded bead in a pan of a differential scanning calorimeter and measuring the DSC curve while heating the sample at 2°C/minute from 40°C to 200°C to melt the sample.

2. An expanded bead as claimed in claim 1, wherein the difference ($\Delta H_{endo:Bead}$-$\Delta H_{exo:Bead}$) is not less than 5 J/g but less than 15 J/g.

3. An expanded bead as claimed in claim 1 or 2, wherein said polylactic acid resin is a mixture of the crystalline polylactic acid resin and a non-crystalline polylactic acid resin.

4. An expanded bead as claimed in any preceding claim, having an apparent density between 0.015 and 0.3 g/cm$^3$.

5. A foamed molding obtainable by molding expanded beads according to any preceding claim in a mold and having a flexural strength of A [N/cm$^2$] and a density of B [g/cm$^3$], wherein the ratio of A/B is at least 294 N·cm/g and wherein the flexural strength is measured in accordance with JIS K7221-1984 and the foamed molding showing such heat flux scanning differential calorimetric characteristics that a difference ($\Delta H_{end:Mold}$-$\Delta H_{exo:Mold}$) between an endothermic calorific value $\Delta H_{endo:Mold}$ and an exothermic calorific value $\Delta H_{exo:Mold}$ is not less than 15 J/g,
wherein the endothermic calorific value $\Delta H_{endo:Mold}$ and exothermic calorific value $\Delta H_{exo:Mold}$ are determined from DSC curve of heat flux differential scanning calorimetry and the DSC measurement is carried out by charging a sample (about 1 to 4 mg) of a foamed molding in a pan of a differential scanning calorimeter and measuring the DSC curve while heating the sample at 2°C/minute from 40°C to 200°C to melt the sample.

**Patentansprüche**

1. Ein geschäumtes Teilchen aus unvernetztem Polymilchsäureharz aufweisend ein Baissharz enthaltend wenigstens 50 Gewichtsprozent eines Polymilchsäureharzes, das wenigstens 50 Molprozent Milchsäureeinheiten enthält und das ein kristallines Milchsäureharz einschließt,
wobei das Teilchen eine deratige Charakteristik in der dynamischen Wärmestromdifferenzkalorimetrie zeigt, dass eine Differenz ($\Delta H_{endo:Bead}$-$\Delta H_{exo:Bead}$) zwischen einem endothermen Wärmewert $\Delta H_{endo:Bead}$ und einem exothermen Wärmewert $\Delta H_{exo:Bead}$ nicht weniger als 5 J/g aber weniger als 30 J/g beträgt und dass der endotherme Wärmewert $\Delta H_{endo:Bead}$ wenigstens 15 J/g beträgt,
wobei das Teilchen einen mittleren Zelldurchmesser von 10 bis 800 $\mu$m hat, und wobei der endotherme Wärmewert $\Delta H_{endo:Bead}$ und der exotherme Wärmewert $\Delta H_{exo:Bead}$ aus der DSC Kurve der dynamischen Wärmestromdifferenzkalorimetrie bestimmt werden und die DSC Messung ausgeführt wird, indem man ein Pfännchen eines Differentialscanningkalorimeters mit einer Probe (ca. 1 bis 4 mg) eines geschäumten Teilchens belädt, und die DSC Kurve misst, während man die Probe bei 2°C/Minute von 40°C to 200°C aufheizt, um die Probe zu schmelzen.

2. Ein geschäumtes Teilchen wie in Anspruch 1 beansprucht, wobei die Differenz ($\Delta H_{endo:Bead}$-$\Delta H_{exo:Bead}$) nicht kleiner als 5 J/g aber kleiner als 15 J/g ist.

3. Ein geschäumtes Teilchen wie in Anspruch 1 oder 2 beansprucht, wobei das Polymilchsäureharz eine Mischung aus dem kristallinen Polymilchsäureharz und einem nicht-kristallinen Polymilchsäureharz ist.

4. Ein geschäumtes Teilchen wie in einem der vorhergehenden Ansprüche beansprucht, aufweisend eine Schüttdichte zwischen 0,015 und 0,3 g/cm$^3$.

5. Ein geschäumter Formkörper erhältlich durch Formung geschäumter Teilchen nach einem der vorhergehenden Ansprüche in einer Form und aufweisend eine Biegefestigkeit A [N/cm$^2$] und eine Dichte B [g/cm$^3$], wobei das Verhältnis von A/B wenigstens 294 N·cm/g beträgt und wobei die Biegefestigkeit in Übereinstimmung mit JIS K7221-1984 gemessen wird und der geschäumte Formkörper eine deratige Charakteristik in der dynamischen Wärmestromdifferenzkalorimetrie zeigt, dass eine Differenz ($\Delta H_{endo:Mold}$-$\Delta H_{exo:Mold}$) zwischen einem endothermen Wärmewert $\Delta H_{endo:Mold}$ und einem exothermen Wärmewert $\Delta H_{exo:Mold}$ nicht kleiner als 15 J/g ist,
wobei der endotherme Wärmewert $\Delta H_{endo:Mold}$ und der exotherme Wärmewert $\Delta H_{exo:Mold}$ aus der DSC Kurve der dynamischen Wärmestromdifferenzkalorimetrie bestimmt werden und die DSC Messung ausgeführt wird, indem man ein Pfännchen eines Differentialscanningkalorimeters mit einer Probe (ca. 1 bis 4 mg) eines geschäumten Formteils belädt, und die DSC Kurve misst, während man die Probe bei 2°C/Minute von 40°C to 200°C aufheizt, um die Probe zu schmelzen.

## Revendications

1. Bille expansée de résine d'acide polylactique non réticulée comprenant une résine de base contenant au moins 50 % en poids d'une résine d'acide polylactique qui contient au moins 50 % en moles de motifs d'acide lactique et qui comprend une résine d'acide polylactique cristalline,
ladite bille ayant des caractéristiques dans une calorimétrie différentielle à balayage à flux thermique telles qu'une différence ($\Delta H_{endo:Bille}$-$\Delta H_{exo:Bille}$) entre une valeur calorifique endothermique $\Delta H_{endo:Bille}$ et une valeur calorifique exothermique $\Delta H_{exo:Bille}$ n'est pas inférieure à 5 J/g mais inférieure à 30 J/g et que la valeur calorifique endothermique $\Delta H_{endo:Bille}$ est d'au moins 15 J/g, ladite bille ayant un diamètre de cellule moyenne de 10 à 800 $\mu$m, et
dans laquelle la valeur calorifique endothermique $\Delta H_{endo:Bille}$ et
la valeur calorifique exothermique $\Delta H_{exo:Bille}$ sont déterminées à partir d'une courbe DSC de calorimétrie différentielle à balayage à flux thermique et la mesure DSC est réalisée par chargement d'un échantillon (environ 1 à 4 mg) d'une bille expansée dans un récipient d'un calorimètre différentiel à balayage et mesure de la courbe DSC tout en chauffant l'échantillon à 2 °C/minute de 40 °C à 200 °C pour faire fondre l'échantillon.

2. Bille expansée selon la revendication 1, dans laquelle la différence ($\Delta H_{endo:Bille}$-$\Delta H_{exo:Bille}$) n'est pas inférieure à 5 J/g mais inférieure à 15 J/g.

3. Bille expansée selon la revendication 1 ou 2, dans laquelle ladite résine d'acide polylactique est un mélange de la résine d'acide polylactique cristalline et d'une résine d'acide polylactique non cristalline.

4. Bille expansée selon l'une quelconque des revendications précédentes, ayant une densité apparente comprise entre 0,015 et 0,3 g/cm$^3$.

5. Moulage de mousse pouvant être obtenu par moulage des billes expansées selon l'une quelconque des revendications précédentes dans un moule et ayant une résistance à la flexion A [N/cm$^2$] et une densité B [g/cm$^3$], dans lequel le rapport A/B est d'au moins 294 N.cm/g et dans lequel la résistance à la flexion est mesurée selon la norme JIS K7221-1984 et le moulage de mousse présente des caractéristiques dans une calorimétrie différentielle à balayage à flux thermique telles qu'une différence ($\Delta H_{endo:Moule}$-$\Delta H_{exo:Moule}$) entre une valeur calorifique endothermique $\Delta H_{endo:Moule}$ et une valeur calorifique exothermique $\Delta H_{exo:Moule}$ n'est pas inférieure à 15 J/g,
dans lequel la valeur calorifique endothermique $\Delta H_{endo:Moule}$ et la valeur calorifique exothermique $\Delta H_{exo:Moule}$ sont déterminées à partir d'une courbe DSC de calorimétrie différentielle à balayage à flux thermique et la mesure DSC est réalisée par chargement d'un échantillon (environ 1 à 4 mg) d'un moulage de mousse dans un récipient d'un calorimètre différentiel à balayage et mesure de la courbe DSC tout en chauffant l'échantillon à 2 °C/minute de 40 °C à 200 °C pour faire fondre l'échantillon.

FIG. 1(a)

Exothermic ←

Endothermic →

Temperature (°C)

50.00   100.00   150.00   200.00

ΔHendo

BL1   BL2

a   b

FIG. 1 (b)

FIG. 2 (a)

FIG. 2 (b)

FIG. 2 (c)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H04304244 A
- JP H05139435 A
- JP H05140361 A
- JP H05508669 T
- JP H09263651 A
- JP H0170965 A
- JP H05170966 A
- JP 2000036261 A
- US 5310865 A
- US 2758987 A
- US 4057537 A
- US 5428126 A
- EP 0712880 A
- US 5968430 A